(19) Europäisches Patentamt
European Patent Office
Office européen des brevets

(11) **EP 4 342 567 A1**

(12) **EUROPEAN PATENT APPLICATION**

(43) Date of publication:
**27.03.2024 Bulletin 2024/13**

(51) International Patent Classification (IPC):
***B01D 46/52*** *(2006.01)*

(21) Application number: **22197110.4**

(52) Cooperative Patent Classification (CPC):
**B01D 46/521;** B01D 2279/40

(22) Date of filing: **22.09.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MANN+HUMMEL GmbH**
**71636 Ludwigsburg (DE)**

(72) Inventors:
• **JUNGINGER, Bernd**
**70565 Stuttgart (DE)**

• **THEBAULT, Eric**
**71640 Ludwigsburg (DE)**
• **HAHN, Friedemann**
**71672 Marbach (DE)**

(74) Representative: **Mann + Hummel Intellectual Property**
**Mann + Hummel**
**International GmbH & Co. KG**
**Schwieberdinger Straße 126**
**71636 Ludwigsburg (DE)**

(54) **FILTER ELEMENT, COOLING SYSTEM, VEHICLE COMPRISING SAID FILTER, AND METHOD FOR PRODUCING SAID FILTER**

(57)      A filter element for a vehicle for filtering ambient air, the filter element comprising a surface for receiving raw air on an upstream side, and a counter surface for releasing filtered air on a downstream side, the filter element impinging a pressure loss across the sides, and wherein the air permeability is in the range from 800 $L/m^2s$ to 7000 $L/m^2s$. An ambient air treatment system for a vehicle, a vehicle, and a cooling system for a vehicle comprising said filter element. A method for producing a filter element, comprising: defining boundary conditions comprising element geometry boundary conditions and filter media boundary conditions; computing a pressure loss for a plurality of different virtual filter elements selected from within the boundary conditions; selecting a subset of the plurality of virtual filter elements for which a pressure loss is within a predetermined range of speed or a variable that is derivable therefrom, wherein each filter element is characterized by a filter parameter set comprising element geometry parameters, filter media parameters, pressure loss, and pressure loss; selecting one virtual filter element of the subset, retrieve the properties of the one virtual filter element and electing a filter media having properties of about the one virtual filter element; and producing a filter element having the geometry of about the one virtual filter element.

FIG. 1B

EP 4 342 567 A1

## Description

### Technical Field

The invention relates to a filter element for a vehicle, for cleaning ambient air; an ambient air treatment system, a cooling system for a vehicle comprising said filter element; a vehicle comprising such filter element; and a method for producing said filter element.

### Background Art

Due to progressive urbanization, limit values for particulate matter on the ambient air may be exceeded many times over, especially in certain weather conditions such as no rain, inversion, low wind speeds, no air exchange between altitudes, or as a result of industrial waste gases, road traffic, and private fireplaces.

The problem of traffic-related emissions has recently been exacerbated by calls for driving bans for certain groups of vehicles, especially diesel cars, in areas of particularly high air pollution due to their particulate matter emissions.

For compensating vehicular emissions, patent application WO 2019/110223 A1 discloses a motor vehicle having one air inlet opening in a front region, behind which an ambient air cleaning device is arranged, which is designed, for the removal of pollutants from the ambient air.

A selection of the filter type and media is usually done using reference values and from a designer's experience, which may be very time consuming, since different applications may require different characteristics of the filters which still have to be highly efficient.

Therefore, there persists the problem to provide for improved air filter elements and an improved production method.

### Summary

An aspect of the disclosure concerns a filter element comprising a surface for receiving raw air on an upstream side, and a counter surface for releasing filtered air on a downstream side. The filter element may be configured to impinge a pressure loss on the downstream side in relation to an air pressure at the upstream side when the air pressure is applied to the upstream side. The air permeability is in the range from 800 L/m$^2$s to 7000 L/m$^2$s. The air permeability k may be determined with the flat medium of the filter element. The filter element may be replaceable.

An aspect of the disclosure concerns an ambient air treatment system for a vehicle, the system comprising a flow channel for allowing air flow in a direction from a first location to a second location of a vehicle (e.g., front to end), each of the first and second locations flow couplable to exterior environment; and a filter element. The filter element may be replaceable. The filter element may comprise a surface for receiving raw air on an upstream side, and a counter surface for releasing filtered air on a downstream side, the filter element impinging a pressure loss on the downstream side in relation to an air pressure at the upstream side when the air pressure is applied to the upstream side. The air permeability is in the range from 800 L/m$^2$s to 7000 L/m$^2$s. The air permeability k may be determined with the flat medium of the filter element.

An aspect of the disclosure concerns a cooling system for a vehicle, the system comprising an ambient air treatment system in accordance with various embodiments. The cooling system may further comprise a heat exchanger configured to exchange heat with the air from the air flow, the heat exchanger being optionally located downstream from the filter element.

According to various embodiments, the cooling system may further comprise a blower for generating the air flow, for example, when the vehicle: has low speed but greater than zero, is backing, is charging, or is stationary.

An aspect of the disclosure concerns a vehicle comprising the filter element in accordance with various embodiments.

An aspect of the disclosure concerns a vehicle comprising the cooling system in accordance with various embodiments.

An aspect of the disclosure concerns a vehicle comprising the ambient air treatment system in accordance with various embodiments.

An aspect of the disclosure concerns a method for producing a filter element for a vehicle (e.g. for use in a vehicle) for filtering ambient air or for an ambient air treatment system. The method may comprise: defining boundary conditions, comprising element geometry boundary conditions and filter media boundary conditions; computing a pressure loss for a plurality of different virtual filter elements selected from within the boundary conditions; and selecting a subset of the plurality of virtual filter elements for which a pressure loss is within a predetermined range. Each virtual filter element may be characterized by a filter parameter set comprising element geometry parameters, filter media parameters, pressure loss. The method may further comprise selecting one virtual filter element of the subset, retrieve the properties of the one virtual filter element and electing a filter medium having properties of about the one virtual filter element. The method may further comprise producing a filter element having the geometry of about the one virtual filter element. The method may further comprise inserting the filter element in the vehicle.

According to various embodiments, the method may further comprise, before the virtual filter element selection step, limiting the subset to a required range of energy efficiencies, for example limiting the pressure energy losses that do not contribute to filtration, e.g., in the form of a Euler number limitation.

As used herein and in accordance with various embodiments, a total pressure loss is simply named as pressure loss unless explicitly mentioned otherwise. The total pressure loss may be represented by $\Delta p$. The total pressure loss may be a sum of a pleat related pressure loss and a filtration related pressure loss, the filtration related pressure loss is attributable to the filter medium's filtration characteristics. As used herein and in accordance with various embodiments, a pleat related pressure loss may have the meaning of a pressure loss that is not attributable to the filter medium's filtration characteristics, and may be attributed to the geometrical properties of the pleats. A pleat related pressure loss is also named herein as $\Delta p_{dissipation}$. The pressure loss attributable to the filtration (i.e., without losses that do not contribute to filtration) is also named herein as filter medium pressure loss or simply medium pressure loss and may be represented as $\Delta p_{medium}$.

According to various embodiments, the method may, optionally before the selection step, further comprise: providing a graphical representation of the filter parameter set of available filters. In non-limiting examples, the available filters may be the plurality of virtual filters, the subset, a further selection of the subset. The graphical representation comprises delimiters representing limits of the parameters. The method may further comprise receiving user input via a user interface configured to allow a user to graphically move the delimiters thereby restricting the limits of the parameters, and limiting the available virtual filter elements to a subset according to the restricted limits.

According to various embodiments, the filter element impinges a pressure loss of less or equal than 120 Pa, when in an unloaded state and at an upstream side airspeed of 4.63 ms$^{-1}$. As used herein and in accordance with various embodiments the upstream airspeed may also be named as face velocity.

According to various embodiments, the air permeability may be from 800 L/m$^2$s to 7000 L/m$^2$s, optionally from 800 L/m$^2$s to 6000 L/m$^2$s, optionally from 800 L/m$^2$s to 4500 L/m$^2$s.

As used herein, and in accordance with various embodiments, the air permeability may be determined with the flat medium of the air filter, for example, the medium used for making the filter (e.g. before pleating) or a flat portion of the medium selected between pleat folds.

According to various embodiments, the filter element is configured such that a pleat related pressure loss of the filter element has a rate of change with increase in airspeed of less or equal than 1.8 times the air density ($\rho$). In other words, a pleat related pressure loss is at most 10% below the pressure potential thus having a Euler number of less or equal than 0.9. An exemplary Euler number is described further below.

According to various embodiments, the unloaded pressure loss at an at an upstream side airspeed of 4.63 ms$^{-1}$ may be equal or more than 50 Pa.

According to various embodiments, the filter medium is pleated, and wherein a pleat height (h) is from 0.025 m to 0.060 m, optionally from 0.025 to 0.051 m. The pleat height and pleat distance may be substantially uniform across the filter element. While pleating improves the surface area of the filter, due to pleat folding geometry, pleat related pressure losses are introduced which reduce a pressure difference across the filter medium available for filtration.

According to various embodiments, the pleat ratio (pleat height to pleat distance) is from 3 to 7, optionally between 3 to 6.8. The pleat ratio may be substantially uniform across the filter element.

According to various embodiments, the filter media thickness is from 0.4 mm to 1.5 mm. The filter media thickness may be substantially uniform, at least before pleating, while small variations (e.g., less than 5% of the area) may be accounted for production of the filter element.

According to various embodiments, the filter element is a particulate filter, for filtering particles suspended in air, for example, to filter out (not let pass thought) PM10 particles and above, PM2.5 particles and above, or PM1 particles and above. The filter may be a fine dust filter.

**Brief Description of Drawings**

The drawings show:

- FIG. 1A shows an exemplary filter element 110 comprising an area defined by length L and width L';

- FIG. 1B shows a cross section of an exemplary ambient air treatment system 200, comprising a flow channel 210, which may for example, be delimited by walls or a duct, and a filter element 110 positioned in the flow channel 210, shown in a cross section along the width L';

- FIG. 2 shows an exemplary vehicle 1 comprising the ambient air treatment system 200, and the position of the ambient air treatment system 200 when installed in a vehicle 1;

- FIG. 3 shows a cross section of an exemplary cooling system 300 comprising an ambient air treatment system 200 in accordance with various embodiments, and a heat exchanger 150;

- FIG. 4A shows a flowchart of a method 400 for producing a filter element 110 for a vehicle for filtering ambient air;

- FIG. 4B shows further steps for the method 400;

- FIG. 5A and FIG. 5B shows a graphical representation 500 in accordance with various embodiments;

- FIGS. 6, 7, and 8 show plots of virtual filters, each filter represented by a set of parameters. In FIG. 6 all virtual filters are shown. In FIG. 7 the subset filtered to a maximum Δp is shown, and in FIG. 8 the subset filtered to a maximum Euler number is shown.

- FIG. 9A is identical to FIG. 8 with the exception that two virtual filters are emphasized, namely a first virtual filter SIM1 shown with a dashed line and a second virtual filter SIM2 shown with a dotted line.

- FIG. 9B shows the parameter set of each virtual filter is shown in a table, the parameters are the same as for the plots and with the same units;

- FIG. 10 shows the Δp evolution for different airspeeds, in which can be seen that the simulation (SIM1, SIM2) is able to accurately predict the Δp of produced filter elements; and

- FIG. 11 shows the Δp and its components $\Delta p_{medium}$ as a function of airspeed;

**Detailed Description**

The following detailed description makes reference to the figures to ease of understanding the disclosure, however the disclosure is not limited to the figures or embodiments. Elements of a figure or embodiment may be combined with elements of another figure or embodiment.

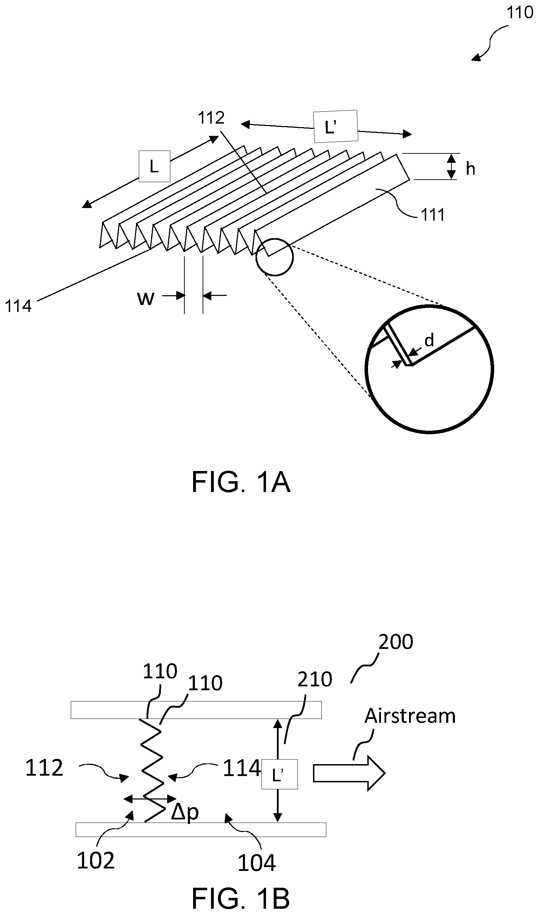

FIG. 1A shows an exemplary filter element 110 comprising an area defined by length L and width L'. The filter element 110 comprises a pleated filter medium 111 which is made by pleating a filter medium 111, into pleats of height h and pleat distance w. The filter medium 111 comprises a thickness d. The ratio R is given by the pleat height divided by the pleat distance (R=h/w). Non-active areas of a filter element 110, such as glue areas or areas that are within a frame, are disregarded for the calculations herein. As used herein and in accordance with various embodiments, geometrical parameters of a filter element refer to the active area of the filter element. Thus, filter element area that do not contribute to filtration, e.g., are blocked by a frame, or used for gluing, may be disregarded for the filter element length, width, and active area.

The filter element may include at least one filter medium which may be folded (pleated) into at least one filter bellows. The filter element may include a plurality of fold stabilizing means which support the filter bellows. It may be provided that the filter medium has an intrinsic bending stiffness of at least 1 Nm2, for example, at least 2 Nm2. This refers to an intrinsic bending stiffness of the filter medium, i.e. in an unprocessed/unfolded state. The filter may comprise pleat stabilizing means. The system may comprise a water separating device.

In one embodiment the dimensions of an active surface (also named as filtration area) of the filter element may be, for example, 2800 cm2, with a filter element dimension of 45 cm (width) x 65 cm (length) for a typical mid-size passenger car. Depending on the size of the vehicle, however, significant deviations for the filter element dimension from this are possible, so that a range of dimensions from 20 cm in length to 120 cm in length and 15 cm in width to 100 cm in width are possible in principle.

The filter element may include a filter frame, for example, at least partially circumferential frame in which the filter element (e.g., filter bellows) is accommodated. In an example, it may be provided that the frame has an L-shaped cross-sectional form, e.g., wherein one leg of the L-shaped cross-section of the frame engages behind the filter bellows of the filter element, and thus supports it against the effect of pressure. The filter element may comprise two or more sub filter elements, and the sub filter elements may be arranged in (e.g., fixed to) a single filter frame, or alternatively, each sub filter element may be arranged in a separate frame element of a filter frame.

The filter element may in particular comprise or be a plastic-molded filter element, wherein the at least partially circumferential frame may be connected to the filter medium by a material-to-material bond. However, the invention is not limited to a material connection; as an alternative to the material connection of the filter medium to the frame, it may also be provided that the filter element is merely inserted into the frame, so that it is supported in a form-fitting manner, e.g., on the rear leg of the L-profile.

The filter may be arranged (and arrangeable) into a receptacle of the ambient air treatment system, the cooling system, or of the vehicle. The receptable may correspond to the frame of the filter, in which the filter is held, optionally by detachable fastening means, e.g., a clip connection. The receptacle may further be configured to function as a mounting shaft, into which the at least one filter element may be linearly inserted. This makes it easy to replace the filter element, for example from the upper side of a lock carrier of a front hood or from an underbody side which is easily accessible, for example, during servicing on a lifting platform. The filter element may be flexible for allowing an insertion wherein the filter element has to be bent during insertion and/or in use position.

Some embodiments concern a cooling system for a vehicle, the system comprising an ambient air treatment system in accordance with various embodiments. The cooling system may further comprise a heat exchanger configured to exchange heat with the air from the air flow, the heat exchanger being optionally located downstream from the filter element. According to various embodiments, the cooling system may further comprise a blower for generating the air flow, for example, when the vehicle has low speed but greater than zero, is backing, is charging, or is stationary.

In some embodiments, it may further be provided that the filter is arranged with respect to a heat exchanger of the cooling system in such a way that it covers no more than a portion (e.g. no more than 75%) of an incident flow surface of the heat exchanger, so that sufficient residual heat dissipation is possible even when the filter element is loaded. In order to achieve this, the filter element can be arranged offset from the heat exchanger about the vertical and/or transverse direction of the vehicle. The non-covered portion of the heat radiator may form the bypass which may be openable and closeable. In other embodiments, the bypass may be an openable/closeable air passage which is independent from the heat exchanger surface, and the filter and the heat exchanger may be apart from each other at a distance sufficiently large to allow flow of air through the heat exchanger when the bypass is open, and even when the filter is loaded.

FIG. 1B shows a cross section of an exemplary ambient air treatment system 200, comprising a flow channel 210, which may for example, be delimited by walls or a duct, and a filter element 110 positioned in the flow channel 210, shown in a cross section along the width L'. An arrow shows an exemplary direction of an airstream, wherein a surface 112 of the filter element 110 for receiving raw air is located facing an upstream side of the airstream and a counter surface 114 of the filter element 110 for releasing filtered air is located facing a downstream side of the airstream. The airstream passing the filter element 110 causes a pressure loss Δp of the air between the upstream and the downstream side of the filter element 110.

A filter element in accordance with various embodiments comprises at least a filter medium that is pleated and may comprise a frame or may be frameless. As used herein and in accordance with various embodiments, surface and a counter surface refer to the main surfaces of a filter element. The filter medium may be a single-layer or multi-layer filter medium, which may be water-resistant. It may be a multi-layer medium comprising at least one drainage layer and/or one pre-separator layer. Alternatively or additionally, the filter medium may comprise or consist of glass fibres and/or plastic fibres, in particular polyester and/or polyethylene. It may also be provided that the filter medium has a porosity gradient in a thickness direction, for example, in such a way that a pore size decreases in the direction of airflow.

Various embodiments concern a filter element 110 comprising a surface 112 for receiving raw air on an upstream side 102, and a counter surface 114 for releasing filtered air on a downstream side 104. The filter element 110 may be configured to impinge a pressure loss (Δp) on the downstream side 104 in relation to an air pressure at the upstream side 102 when the air pressure is applied to the upstream side 102. The air permeability is in the range from 800 L/m²s to 7000 L/m²s, optionally from 800 L/m²s to 6000 L/m²s, optionally from 800 L/m²s to 4500 L/m²s. The air permeability k may be determined with the flat medium of the filter element 110.

As used herein and in accordance with various embodiments, the pressure loss (Δp) may be measured under defined conditions and in accordance with ISO 16890 - 2:2016, having environment controlled according to ISO 16890 - 2:2016 7.1.4.2.

As used herein and in accordance with various embodiments, air permeability for a filter medium may be determined according to ISO 9237:1995, "determination or air permeability of fabrics to air". The standard atmospheric condition may be according to ISO139. The circular test area for the specimen of filter medium may be 20 cm² while the sample dimension may be 100 mm by 100 mm. The pressure used for testing may be 200 Pa.

As used herein and in accordance with various embodiments, all references to pressure loss are to a filter element in an unloaded state unless explicitly mentioned otherwise.

Various embodiments concern an ambient air treatment system 200 for a vehicle, the system comprising a flow channel 210 for allowing air flow in a direction from a first location to a second location of a vehicle (e.g., front to end), each of the first and second locations flow couplable to exterior environment; and a filter element 110. The filter element 110 may be replaceable. The filter element 110 may comprise a surface 112 for receiving raw air on an upstream side 102, and a counter surface 114 for releasing filtered air on a downstream side 104, the filter element 110 impinging a pressure loss (Δp) on the downstream side 104 in relation to an air pressure at the upstream side 102 when the air pressure is applied to the upstream side 102. The air permeability may be in the range from 800 L/m²s to 7000 L/m²s, optionally from 800 L/m²s to 6000 L/m²s, optionally from 800 L/m²s to 4500 L/m²s. The air permeability k may be determined with the flat medium of the filter element 110.

Various embodiments concern a cooling system 300 for a vehicle, the system comprising an ambient air treatment system 200 in accordance with various embodiments. The cooling system 300 may further comprise a heat exchanger 150 configured to exchange heat with the air from the air flow, the heat exchanger 150 being optionally located downstream from the filter element 110.

According to various embodiments, the cooling system 300 may further comprise a blower for generating the air flow, for example, when the vehicle has low speed but greater than zero, is backing, is charging, is stationary.

According to various embodiments, the filter element 110 impinges a pressure loss of less or equal than 120 Pa, when in an unloaded state and at an upstream side airspeed of 4.63 ms⁻¹.

According to various embodiments, the air permeability (k) is from 800 L/m²s to 7000 L/m²s, optionally from 800 L/m²s to 6000 L/m²s, or from 800 L/m²s to 4500 L/m²s. The air permeability k may be determined with the flat medium of the filter element 110.

According to various embodiments, the filter element 110 is configured such that a pleat related pressure loss of the filter element 110 has a rate of change with increase in airspeed of less or equal than 1.8 times the air density (p). In other words, the pleat related pressure loss is lower than or at most equal to a pressure 10% below the dynamic pressure potential thus having a Euler number of less or equal than 0.9.

According to various embodiments, the unloaded pressure loss ($\Delta p$) is equal or more than 50 Pa.

The pleat height (h) of the filter element may be less than 0.15 m, for example less than 0.11 m. According to various embodiments, the pleat height (h) may be selected from 0.025 m to 0.060 m, optionally from 0.025 m to 0.051 m. The pleat height (h) and pleat distance (w) may be substantially uniform across the filter element 110.

According to various embodiments, the pleat ratio (R = h/w) is from 3 to 7, optionally between 3 to 6.8. The pleat ratio may be substantially uniform across the filter element 110.

According to various embodiments, the filter media thickness (d) is from 0.4 mm to 1.5 mm. The filter medium thickness may be substantially uniform, at least before pleating, while small variations (e.g., less than 5%) may be accounted for production of the filter element. Thickness may be measured according to EN ISO 9073-2: 1996.

According to various embodiments, the filter element is a particulate filter, for filtering out particles suspended in air, for example, to filter out (not let pass thought) PM10 particles and above, PM2.5 particles and above, or PM1 particles and above. The filter may be a fine dust filter.

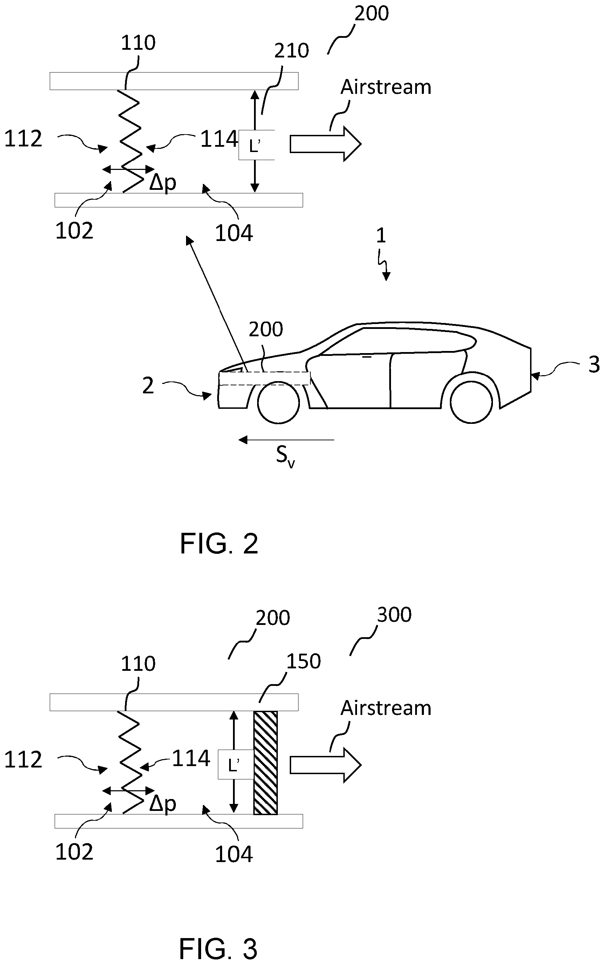

FIG. 2 shows an exemplary vehicle 1 comprising the ambient air treatment system 200, and the position of the ambient air treatment system 200 when installed in a vehicle 1. The flow channel 210 is configured to allow air flow in a direction from a first location to a second location of a vehicle (e.g., front to end). In the example, the ambient air treatment system 200 is installed such that surface 112 of the filter element 110 is facing towards the front 2 of the vehicle 1 and counter surface 114 of the filter element 110 is facing towards the rear 3 of the vehicle 1. This allows, for example, an airstream relative to the vehicle created by a forward movement (e.g. forward movement with speed $S_v$) of the vehicle to flow in the direction shown by the arrow "Airstream". Alternatively, or in addition, the airflow may be generated by a blower. In some examples when the airspeed of the upstream side of the airstream is dominated or solely by the speed of the vehicle $S_v$, the upstream side airspeed of the airstream may be a fraction of the speed of the vehicle, smaller than 1. This fraction may be measured, and may be, for example, for the vehicle at a vehicle speed of $S_v$, usually in the range from 1/2 to 1/4 of the vehicle speed $S_v$, for example a fraction of 1/3 of a vehicle speed of $S_v$ = 13.89 ms$^{-1}$ results in an upstream side airspeed of 13.89/3 = 4.63 ms$^{-1}$.

Various embodiments concern a vehicle 1 comprising the filter element 110, the ambient air treatment system 200, and/or the cooling system 300 in accordance with various embodiments.

According to various embodiments, the vehicle may be a self driven motor-powered vehicle, for example having 2, 3, 4, or more wheels. Examples of the vehicle are passenger car, truck, buss, lorry, or a rail vehicle, for example a locomotive. The vehicle may include an air inlet opening in a front region, upstream from the filter element, for allowing air ingress and an air outlet, downstream from the filter element, for allowing air egress. The air inlet opening behind which the ambient air treatment device is present may in particular be a cooling air inlet opening and may for example be covered by a radiator grille. For example, this may be at the same level as the front headlights with respect to the vertical axis of the vehicle, or may be located below or above them. The cross-sectional area of the air intake opening may be as large as possible so that the largest possible volume of air can be supplied. In some embodiments, the vehicle may be an electric vehicle or a hybrid (internal combustion engine and electrical) vehicle. In some embodiments, the vehicle may be an internal combustion engine (ICE) vehicle (i.e., non-hybrid). For example, such battery of an ICE vehicle may have a relatively large capacity and may operate the fan for a long time (e.g., 1h) without significant drain even if it is not being charged by an alternator. In some embodiments, the vehicle comprises an internal combustion engine and a cooling fluid temperature (from the hot side) may be used as representation of the engine temperature. In some embodiments, the vehicle comprises a fuel cell and a cooling fluid temperature (from the hot side) may be used as representation of the fuel cell temperature.

FIG. 3 shows a cross section of an exemplary cooling system 300 comprising an ambient air treatment system 200 in accordance with various embodiments, and a heat exchanger 150. The heat exchanger 150 is configured to exchange heat with the air from the air flow, and is optionally located downstream from the filter element 110. In one example the heat exchanger is a radiator of a vehicle, e.g., of an internal combustion engine vehicle.

Various embodiments concern a method for producing a filter element for a vehicle for filtering ambient air. The method may comprise selecting one virtual filter element of the subset. For example, a user on a graphic user interface, may select a curve (e.g., with a mouse click) representing the parameters of one virtual filter element. The method may include retrieving the parameters of the one virtual filter element, for example to show the parameters in a human readable form, e.g., a numeric format such as in a table, and/or sending the parameters of the one virtual filter element to a production plant. The method may include electing the filter medium, e.g., at the production plant. In examples, the election of the filter medium may include electing a filter medium having thickness and air permeability that are nearest, or substantially the same of the selected virtual filter. For example, a deviation between a parameter of the filter medium and the virtual filter element's medium may be within the tolerance of the filter medium parameter.

The method may further comprise producing a filter element, with the elected filter medium, the filter element having the geometry of about the one virtual filter element, e.g., pleat height, and ratio.

The method may comprise further selection steps of the plurality of virtual filter elements (or a subset thereof), as needed. For example, the selection may include limiting by efficiency, by Euler number, or by a second derivative of a plot or fitting of Eq. 1.

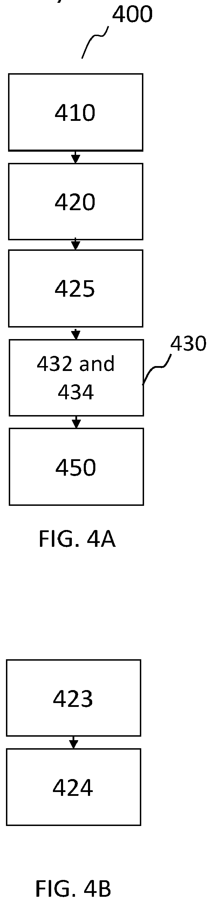

FIG. 4A shows a flowchart of a method 400 for producing a filter element 110 for a vehicle for filtering ambient air. The method 400 may comprise defining 410 boundary conditions, the boundary conditions may comprise element geometry boundary conditions and filter media boundary conditions; and computing 420 a pressure loss ($\Delta$p) for a plurality of different virtual filter elements selected from within the boundary conditions. The method 400 may further include selecting 422 a subset of the plurality of virtual filter elements for which a pressure loss is within a predetermined range. Each virtual filter element may be characterized by a filter parameter set comprising element geometry parameters, filter media parameters, medium pressure loss, and pleat related pressure loss. The method 400 may further comprise selecting 432 one virtual filter element of the subset, retrieve the properties of the one virtual filter element and electing 434 a filter medium having properties of about the one virtual filter element. The method 400 may further comprise producing 450 a filter element having the geometry of about the one virtual filter element.

As used herein and in accordance with various embodiments, the boundary conditions may comprise one or more of pleat distance (w), and pleat height (h), or a combination thereof such as for example, using pleat ratio instead of pleat distance (w) or pleat height (h). The boundary conditions may further comprise one or more of medium thickness (d), medium air permeability (k). However, the boundary conditions are not limited to the above. The boundary conditions may be in the form of ranges, for example filter parameter set includes height (h) from 25 mm to 50 mm, media thickness (d) from 0.4 mm to 1.5 mm, the air permeability (k) from 800 L/m$^2$s to 7000 L/m$^2$s, and/or pleat ratio (R = h/w) is from 3 to 7. Aforementioned ranges result from conducted experiments and were found to provide a feasible and optimized initial design space, however the ranges may be broader providing a larger design space if needed.

As used herein and in accordance with various embodiments, computing a pressure loss ($\Delta$p) may mean, for a plurality of datapoints within the boundary conditions, generating the plurality of virtual filter elements by using a simulation model. The data points may be generated using known methods, such as latin hypercube sampling. Other known methods may be used for generating the parameter values, wherein, preferably, the distribution of results is random. Exemplary simulations are known from: Fu, H.M., Fu, Y., Xu, F., 2014. Experiment and Simulation on Pressure Drop of Pleated Air Filters. AMR. https://doi.org/10.4028/www.scientific.net/amr.960-961.568; Hettkamp, P. and Kasper, G. and Meyer, J. 2012, Simulation of pressure drop and capacity for pleated air filters loaded with dust, Filtration v.12, number 3, 1479-0602; Keller, F., Riesterer, D., Lehmann, M.J. (2016): Modelling the flow transition at the porous-fluid interface of pleated filter elements. Proceedings of International Conference & Exhibition for Filtration and Separation Technology (FILTECH) 2016; 11 -13, 2016, Cologne, Germany (Keller *et al*). It was found that different simulation models result in comparable results.

As used herein and in accordance with various embodiments, selecting a subset of the plurality of virtual filter elements for which a pressure loss ($\Delta$p) is within a predetermined range may include receiving a subrange of pressure loss (e.g., from computer memory, a communication interface, and/or from an input device) and discarding all the virtual filter elements that are not within the predetermined range. As previously explained the pressure loss is at an upstream side airspeed of 4.63 ms$^{-1}$.

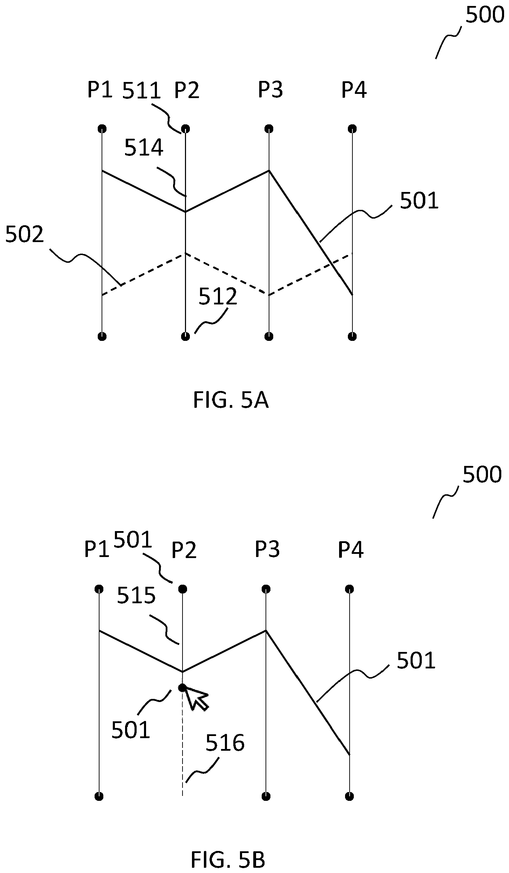

In a further embodiment, the method 400 or producing a filter element 110 for a vehicle for filtering ambient air may further comprise the steps shown in FIG. 4B. The method 400 may comprise: providing 423 a graphical representation 500 (shown in FIG. 5A and FIG. 5B) of the filter parameter set P1, P2, P3, and P4 of the plurality of filters, for example, filters 501 and 502. The graphical representation 500 may comprise delimiters, shown as 511 and 512, representing limits of the parameters P1, P2, P3, and P4. The method 400 may comprise: receiving 424 user input via a user interface configured to allow a user to graphically move the delimiters 511 and 512 thereby restricting the limits of the parameters, and limiting the available virtual filter elements 501 and 502 to a subset 501 according to the restricted limits. In FIG. 5B a mouse pointer is used to symbolize that the user interface may be a computer mouse. These steps may optionally be carried out before the virtual filter element election step 434.

Various embodiments concern a method 400 for producing a filter element 110 for a vehicle (e.g. for use in a vehicle) for filtering ambient air or for an ambient air treatment system 200. The method may comprise: defining 410 boundary conditions, comprising element geometry boundary conditions and filter media boundary conditions; computing 420 a pressure loss ($\Delta$p) for a plurality of different virtual filter elements selected from within the boundary conditions; and selecting 422 a subset of the plurality of virtual filter elements for which a pressure loss is within a predetermined range. Each filter element may be characterized by a filter parameter set comprising element geometry parameters, filter medium parameters, pressure loss. The method 400 may further comprise selecting 432 one virtual filter element of the subset, retrieve the properties of the one virtual filter element and electing 434 a filter media having properties of about the one virtual filter element. The method 400 may further comprise producing 450 a filter element having the geometry of about the one virtual filter element. The method 400 may further comprise inserting the filter element 110 in the vehicle.

According to various embodiments, the method may further comprise, before the virtual filter element election step 434, limiting 425 the subset to a required range of energy efficiencies, for example limiting the pleat related medium pressure loss, e.g., in the form of an Euler number limitation.

According to various embodiments, the method may further comprise, optionally before the selection step 430: providing 423 a graphical representation 500 of the filter parameter set of the plurality of filters (501, 502), wherein the graphical representation 500 comprises delimiters (511, 512) representing limits of the parameters. The method may further comprise receiving 424 user input via a user interface configured to allow a user to graphically move the delimiters (511, 512) thereby restricting the limits of the parameters, and limiting the available virtual filter elements (501, 502) to a subset 501 according to the restricted limits.

FIG. 5A and FIG. 5B show an exemplary graphical representation 500 comprising the filter parameter set of parameters P1, P2, P3, and P4. Parameters P1-P4 are shown for illustration purposes, however, there could be more or less parameters, in one example the filter parameter set includes h, t, k, R, $\Delta p$, Eu. Some of the parameters P1-P4 have been determined, e.g., by numerically solving an equation involving these parameters, other parameters of P1-P4 are the boundary conditions. The graphical representation shows the value of a parameter associated with a virtual filter as a position on a graphical reference for the eyes, such as but not limited to, a bar or line. Discs are used to represent delimiters 511 and 512, however any other symbolic representation may be used, such as but not limited to: squares, rectangles, bars, stars, circles. Different colors may also be used to distinguish the filters from each other. The points (parameter value) corresponding to each virtual filter may be linked by a line to assist and user to identify parameter values associated with a filter. Other forms of representations may be used, for example and not limited to, a polyline, dots, specific color and or line style, such as a blue line of a selected filter to distinguish from the remaining filters in black. FIG. 5A shows the parameters for a first filter 501 and a second filter 502. As can be seen, both filters 501 and 502 have parameters within the range 514 limited by the delimiters 511 and 512.

Turning to FIG. 5B, a user may use a user input interface, such as a computer mouse, in connection with an output user interface, such as a computer monitor, displaying the graphical representation 500. The user may use the mouse pointer to select a position of a delimiter 501, for example, moving it up and thereby restricting the limits of the parameters, and limiting the available virtual filter elements to 502, by excluding 502 which has a parameter P2 out of the new range 515, therefore filters that have a parameter in the excluded range 516 may not be shown. With this method, a user may, in simplified manner, exclude all parameters (whether output or boundary conditions) that do not require for this filter and read the resulting filter subset and obtain the technical details necessary for producing the filter. This narrows down the plurality of virtual filter elements to a subset from which the parameters may be selected to produce a filter element 110. It is noted that the user input interface is not limited to a computer mouse, and may be for example, but not limited to, a touchscreen, a wheel, a knob, buttons.

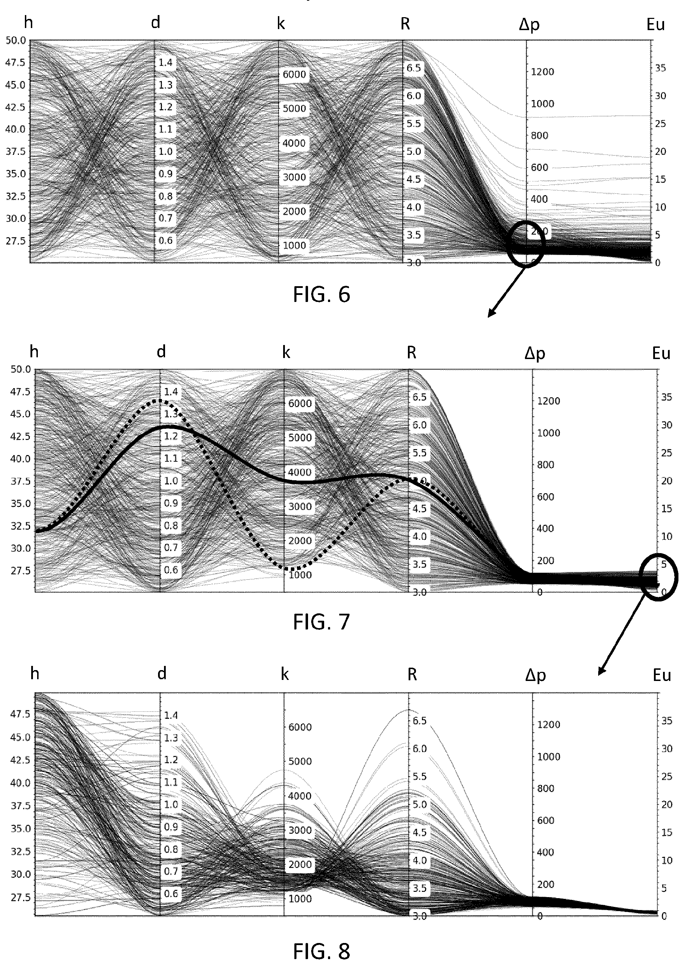

FIGS. 6 and 7 show plots of virtual filters, each filter represented by the geometry parameters: pleat height h, ratio R of pleat height to pleat distance (R=h/w); the filter medium parameters: media thickness d, air permeability k of the media; by pressure loss $\Delta p$; and by c2h either in this form or an equivalent form (e.g. Euler number). The parameters of each virtual filter are connected by a curve for ease of graphically reading the data. The boundary conditions of the full data set used in the example is a thickness 0.5 mm $\leq$ d $\leq$ 1.5 mm, and air permeability 250 $Lm^{-2}s^{-1}$ $\leq$ k $\leq$ 7000 $Lm^{-2}s^{-1}$.

In FIG. 6 all results are shown, it can be seen that some of the virtual filters have a very high pressure loss $\Delta p$ making them unsuitable for certain applications that require a minimum air flow at pre-determined applied pressures ranges smaller than the pressure loss $\Delta p$. This set of virtual filters can be limited, in the example, by limiting the pressure loss $\Delta p$ to values of under 120 Pa (see circle), which is a suitable upper range of $\Delta p$ for vehicles, such as passenger cars. The resulting subset of virtual filters can be seen in FIG. 7. It was surprisingly found that there no combinations of parameters from the original set of virtual filters was left that has an air permeability k smaller than 900 $Lm^{-2}s^{-1}$. In FIG. 7, it can still be seen that there is a range of virtual filters with different pressure losses attributable to the filter element geometry but not contributing to the filtration (parameter Eu, see circle). This parameter Euler was limited to 0.9 and the remaining virtual filters are shown in FIG. 8.

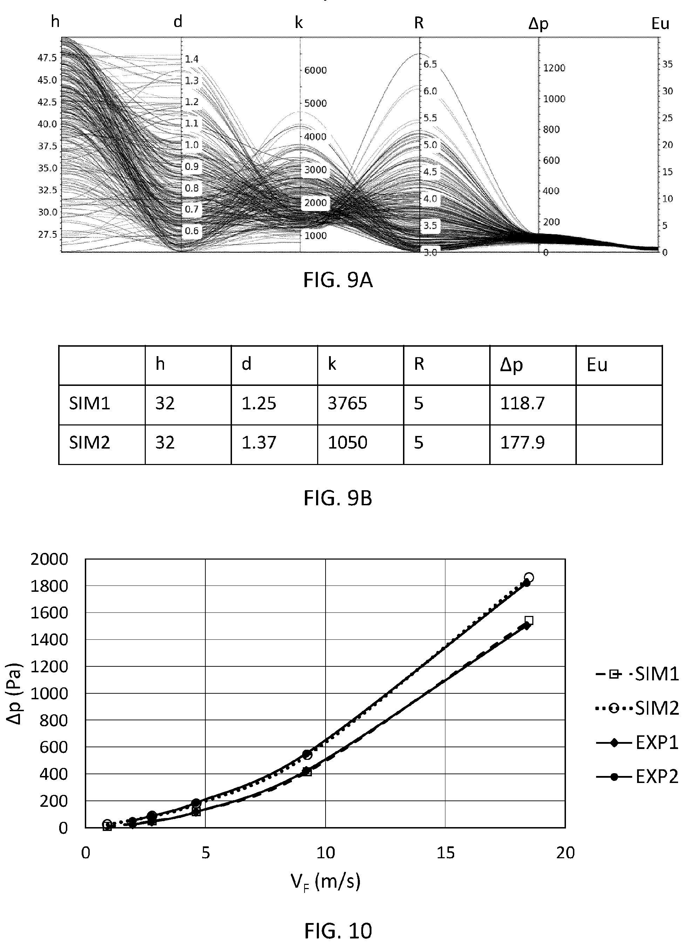

FIG. 9A is identical to FIG. 8 with the exception that two virtual filters are emphasized, namely a first virtual filter SIM1 shown with a dashed line and a second virtual filter SIM2 shown with a dotted line. FIG. 9B shows the parameter set of each virtual filter in a table, the parameters are the same as for the plots and with the same units. It can be seen that the $\Delta p$ at 4.63 $ms^{-1}$ is 118.7 Pa and 177.9 Pa respectively for SIM1 and SIM2. A first filter element EXP1 and a second filter element EXP2 were produced with the same specifications as virtual filters SIM1 and SIM2, namely identical geometry, media thickness, and media permeability. The $\Delta p$ at 4.63 $ms^{-1}$ is

118.0 Pa and 187.0 Pa for EXP1 and EXP2 respectively, which has a very good matching to the simulated data.

FIG. 10 shows the $\Delta p$ evolution for different airspeeds, in which can be seen that the simulated virtual filters (SIM1, SIM2) are able to accurately predict the $\Delta p$ of produced filter elements.

In one non-limiting example, following model may be used for calculating a differential pressure (also named pressure loss) of fluid flow across a filter element.

The differential pressure of air flow across a pleated filter element ($\Delta P_{total}$ or simply $\Delta p$) is, typically, a super linear function of the cross-sectional airspeed, as is shown by FIG. 10 which is a plot of $\Delta p$ as function of the airspeed ($V_F$). Two individual contributions to the total pressure drop $\Delta p$ have been distinguished: namely the medium pressure loss which is the pressure loss across the porous filter medium $\Delta p_{medium}$, which coincides with the pressure potential available for the actual filtration process; and the pleat related pressure loss, which is the pressure loss of viscous fluid flow inside the pleat channels $\Delta p_{dissipation}$. This is the lost pressure potential not directly attributed to filtration.

For a given filter element, the total pressure accounting for both of these effects can be modeled using the Darcy-Forchheimer equation: $\Delta p = \Delta p_{medium} +$

$$\Delta p_{dissipation} = C_1 \cdot h \cdot \mu v + C_2 \cdot h \cdot \frac{1}{2}\rho v^2$$

(Eq. 1). Where $h$ is the thickness of the filter element (i.e. the pleat height), $\rho$ and $\mu$ are the fluid density and dynamic viscosity and $v$ is the airspeed. $C_1$ and $C_2$ are model coefficients obtained from fitting to experimental or simulation data, such as simulated according to Keller *et al.* $C_1$ is also known as the viscous resistivity, which is the inverse of permeability $k$, i.e. $C_1 = 1/k$.

Splitting the above equation into the individual pressure loss contributions yields two separate expressions, $\Delta p_{medium} = C_1 \cdot d \cdot \mu v$, which essentially is Darcy's law applied to the porous filter medium, and

$$\Delta p_{dissipation} = C_2 \cdot d \cdot \frac{1}{2}\rho v^2$$

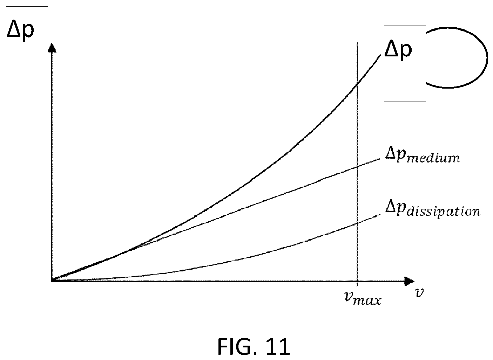

. FIG. 11 shows the $\Delta p$ and its components $\Delta p_{medium}$ and $\Delta p_{dissipation}$ as a function of the airspeed.

Targeting a filter element causing a preferably low overall differential pressure it is desirable to minimize $\Delta p_{dissipation}$. To introduce a rating measure for this property independent of airspeed, the above equation is divided by $\rho v^2$ and thus rearranged as:

$$\frac{\Delta p_{dissipation}}{\rho v^2} = Eu = \frac{1}{2}C_2 d.$$

Here, $Eu$ is the Euler number, relating pressure forces to inertial forces arising in a flow phenomenon.

The inertial forces are related to the dynamic pressure potential of the airflow. According to various embodiments, the $Eu$ used herein may be represented as

$$Eu = \frac{1}{2}C_2 d$$

.

Requiring that the pleat related pressure loss of the filter element cannot exceed the medium pressure loss, it was found that the pleat related pressure loss should be lower than or at most equal to a pressure 10% below the dynamic pressure potential. Thus $Eu < 0.9$. This criterion can be utilized for the identification of the range of filter media properties resulting in optimal energy efficiency.

## Claims

1. An ambient air treatment system (200) for a vehicle comprising

   a flow channel (210) for allowing air flow in a direction from a first location to a second location of a vehicle (e.g., front to end), each of the first and second locations flow couplable to exterior environment; and
   a filter element (110) comprising a surface (112) for receiving raw air on an upstream side (102), and a counter surface (114) for releasing filtered air on a downstream side (104),
   the filter element (110) impinging a pressure loss ($\Delta p$) on the downstream side (104) in relation to an air pressure at the upstream side (102) when the air pressure is applied to the upstream side (102), and
   wherein the air permeability of a filter medium of the filter element (110) is in the range from 800 L/m$^2$s to 7000 L/m$^2$s.

2. The ambient air treatment system (200) of claim 1, wherein, in an unloaded state and at an upstream side airspeed of 4.63 ms$^{-1}$ the pressure loss is less than 120 Pa.

3. The ambient air treatment system (200) of claim 1 or claim 2, wherein the air permeability (k) is from 800 L/m$^2$s to 6000 L/m$^2$s, optionally from 800 L/m$^2$s to 4500 L/m$^2$s.

4. The ambient air treatment system (200) of any one of the previous claims, wherein a pleat related pressure loss of the filter element (110) has a rate of change with increase in airspeed of less or equal than 1.8 times the air density ($\rho$).

5. The ambient air treatment system (200) of any one of the previous claims, wherein the unloaded pressure loss ($\Delta p$) is equal or more than 50 Pa.

6. The ambient air treatment system (200) of any one of the previous claims, wherein the filter medium (111) is pleated, and wherein a pleat height (h) is from 0.025 m to 0.060 m.

7. The ambient air treatment system (200) of any one of the previous claims, wherein the pleat ratio (R) is from 3 to 7, optionally between 3 to 6.8.

8. The ambient air treatment system (200) of any one of the previous claims, wherein the filter medium (111) thickness (d) is from 0.4 mm to 1.5 mm.

9. The ambient air treatment system (200) of any one of the previous claims, wherein the filter element (110) is a particulate filter, for example, PM10, PM2.5, or PM1.

10. A cooling system (300) for a vehicle comprising:

    an ambient air treatment system (200) according to any of the previous claims,
    a heat exchanger (150) configured to exchange heat with the air from the air flow, the heat exchanger (150) being instream with the filter element (110), optionally downstream of the filter element (110).

11. The cooling system (300) of claim 10, wherein the cooling system (300) further comprises a blower for generating the air flow, for example, when the vehicle has low speed but greater than zero, is backing, is charging, is stationary.

12. A vehicle (1) comprising the cooling system (300) of claim 10 or 11.

13. A method (400) for producing a filter element (110) for a vehicle for filtering ambient air, the method comprising:

    - defining (410) boundary conditions, comprising element geometry boundary conditions and filter media boundary conditions;
    - computing (420) a pressure loss ($\Delta p$) for a plurality of different virtual filter elements selected from within the boundary conditions;
    - selecting (422) a subset of the plurality of virtual filter elements for which a pressure loss is within a predetermined range,

    wherein each virtual filter element is **characterized by** a filter parameter set comprising element geometry parameters, filter medium parameters, pressure loss;

    - selecting (432) one virtual filter element of the subset, retrieve the properties of the one virtual filter element and electing (434) a filter medium having properties of about the one virtual filter element; and
    - producing (450) a filter element (110) having the geometry of about the one virtual filter element.

14. The method of claim 13, further comprising, before the virtual filter element election step (434), limiting (425) the subset to a required range of pleat related pressure losses.

15. The method of claim 13, further comprising, optionally before the selection step (432), providing (423) a graphical representation (500) of the filter parameter set of available virtual filter elements (501, 502),

    wherein the graphical representation (500) comprises delimiters (511, 512) representing limits of the parameters, and
    receiving (424) user input via a user interface configured to allow a user to graphically move the delimiters (511, 512) thereby restricting the limits of the parameters, and limiting the available virtual filter elements (501, 502) to a subset (501) according to the restricted limits.

FIG. 1A

FIG. 1B

FIG. 2

FIG. 3

400

```
┌─────────────┐
│     410     │
└─────────────┘
       ↓
┌─────────────┐
│     420     │
└─────────────┘
       ↓
┌─────────────┐
│     425     │
└─────────────┘
       ↓
┌─────────────┐
│  432 and    │    430
│    434      │
└─────────────┘
       ↓
┌─────────────┐
│     450     │
└─────────────┘
```

FIG. 4A

```
┌─────────────┐
│     423     │
└─────────────┘
       ↓
┌─────────────┐
│     424     │
└─────────────┘
```

FIG. 4B

500

P1 511 P2     P3     P4

514

502

501

512

FIG. 5A

500

P1 501 P2     P3     P4

515

501

501

516

FIG. 5B

FIG. 6

FIG. 7

FIG. 8

h          d          k          R          $\Delta p$          Eu

FIG. 9A

|      | h  | d    | k    | R | $\Delta p$ | Eu |
|------|----|------|------|---|------|----|
| SIM1 | 32 | 1.25 | 3765 | 5 | 118.7 |    |
| SIM2 | 32 | 1.37 | 1050 | 5 | 177.9 |    |

FIG. 9B

FIG. 10

FIG. 11

Europäisches
Patentamt

European
Patent Office

Office européen
des brevets

# EUROPEAN SEARCH REPORT

Application Number

EP 22 19 7110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/178184 A1 (MANN & HUMMEL GMBH [DE]) 4 October 2018 (2018-10-04) * the whole document * ----- | 1-12 | INV. B01D46/52 |
| A,D | WO 2019/110223 A1 (MANN & HUMMEL GMBH [DE]) 13 June 2019 (2019-06-13) * the whole document * ----- | 1-12 | |

TECHNICAL FIELDS
SEARCHED      (IPC)

B01D

The present search report has been drawn up for all claims

| Place of search | Date of completion of the search | Examiner |
|---|---|---|
| The Hague | 6 March 2023 | Baumgartner, Robin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

Europäisches
Patentamt

European
Patent Office

Office européen
des brevets

**Application Number**

**EP 22 19 7110**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-12**

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

Application Number

EP 22 19 7110

The Search Division considers that the present European patent application does not comply with the requirements of unity of invention and relates to several inventions or groups of inventions, namely:

1. claims: 1-12

An ambient air treatment system, cooling system and vehicle with that air treatment system, the invention relates to a specific parameters selection of the filter medium in terms of permeability.
---

2. claims: 13-15

A method for producing a filter element, the invention relates to simulation pressure loss of various virtual filter elements in relation to boundary conditions and selecting therefrom one for production.
---

## ANNEX TO THE EUROPEAN SEARCH REPORT
## ON EUROPEAN PATENT APPLICATION NO.

EP 22 19 7110

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2023

| Patent document cited in search report | | Publication date | Patent family member(s) | | Publication date |
|---|---|---|---|---|---|
| WO 2018178184 | A1 | 04-10-2018 | CN | 110462124 A | 15-11-2019 |
| | | | EP | 3601655 A1 | 05-02-2020 |
| | | | EP | 3601656 A1 | 05-02-2020 |
| | | | US | 2020054977 A1 | 20-02-2020 |
| | | | WO | 2018178180 A1 | 04-10-2018 |
| | | | WO | 2018178184 A1 | 04-10-2018 |
| WO 2019110223 | A1 | 13-06-2019 | DE | 102017011313 A1 | 13-06-2019 |
| | | | WO | 2019110223 A1 | 13-06-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019110223 A1

### Non-patent literature cited in the description

- **FU, H.M. ; FU, Y. ; XU, F.** Experiment and Simulation on Pressure Drop of Pleated Air Filters. *AMR,* 2014, https://doi.org/10.4028/www.scientific.net/amr.960-961.568
- **HETTKAMP, P. ; KASPER, G. ; MEYER, J.** *Simulation of pressure drop and capacity for pleated air filters loaded with dust, Filtration v.12,* 2012, (3), 1479-0602
- **KELLER, F. ; RIESTERER, D. ; LEHMANN, M.J.** Modelling the flow transition at the porous-fluid interface of pleated filter elements. *Proceedings of International Conference & Exhibition for Filtration and Separation Technology (FILTECH) 2016,* 2016, 11-13